# EUROPÄISCHE PATENTSCHRIFT

(11) **EP 2 035 621 B1**
(45) Veröffentlichungstag und Bekanntmachung des Hinweises auf die Patenterteilung: **30.06.2010**
(21) Anmeldenummer: 07728966.8
(22) Anmeldetag: 10.05.2007
(51) Int. Cl.: D21F 1/00

(54) **VERFAHREN ZUR REDUZIERUNG KLEBENDER VERUNREINIGUNGEN BEI DER PAPIERHERSTELLUNG**
METHOD FOR REDUCING ADHERING IMPURITIES IN PAPER PRODUCTION
PROCÉDÉ DE RÉDUCTION DES IMPURETÉS COLLANTES DANS LA FABRICATION DU PAPIER

(30) Priorität: 24.05.2006 DE 102006024405
(43) Veröffentlichungstag der Anmeldung: 18.03.2009
(73) Patentinhaber: SIEMENS AKTIENGESELLSCHAFT, 80333 München (DE)
(72) Erfinder: SPETH, Friedrich, 91074 Herzogenaurach (DE)
(86) Internationale Anmeldenummer: PCT/EP2007/054514
(87) Internationale Veröffentlichungsnummer: WO 2007/134973

(56) Entgegenhaltungen:
- DE-A1- 19 806 734
- US-A- 6 121 569

## Beschreibung

Die Erfindung betrifft ein Verfahren zur Reduzierung klebender Verunreinigungen in einem Ausgangsstoff oder einem Zwischenprodukt bei der Papierherstellung, welches in wässriger Suspension oder einem Kreislaufwasser vorliegt. Ein derartiges Verfahren ist aus dem Dokument DE 198 06 734 A bekannt.

Bei einem Recyclingvorgang von beispielsweise Altpapier als Ausgangsstoff gelangen aus dem Altpapier gelöste und feinstzerteilte "Stickies" in eine Papierherstellungsanlage. "Stickies" ist eine Bezeichnung für kleine Hotmelt- oder Klebstoff-Verunreinigungen, die später als Fehler im Papier oder in Pappe als beispielsweise störende Flecken auftreten. Insbesondere bei einer Altpapieraufbereitung wird das hierzu verwendete Wasser stark verunreinigt. Die klebenden Verunreinigungen in einem Faserstoff oder einer Faser-Suspension als Zwischenprodukt und in den allgemeinen Kreislaufwässern einer Papierherstellungsanlage neigen dazu, sich beispielsweise an Papiermaschinenbespannungen, wie Filzen und Sieben, sowie an Zylindern und Walzen abzulagern. Zusätzlich führen sie im letztendlich produzierten Papier zu Fehlstellen, die beispielsweise in der Weiterverarbeitung zu Störungen führen können oder deren Gebrauchswert einschränken.

Unter Zwischenprodukt sind Stoffe oder Güter zu verstehen, die bei der Papier- oder Kartonherstellung zwischen einem Ausgangsstoff und einem Endprodukt - dem heutigen Papier - entstehen oder erzeugt werden. Dies kann sowohl eine aufbereitete Stoffsuspension oder ein noch feuchtes Blatt Papier sein.

Diese klebenden Verunreinigungen stellen mittlerweile eines der größten Probleme bei der Wiederverwertung von Altpapier dar. Während so genannte Makro-Stickies mit Hilfe mechanischer Trennverfahren weitestgehend abgetrennt werden können, lassen sich so genannte Mikro-Stickies nur sehr schwer aus dem Wasserkreislauf entfernen. Mikro-Stickies sind so klein, dass sie auch ein Schlitzsieb mit ca. 100 µm Schlitzweite passieren können.

Aber auch Harze in Primärfaserstoffen, wie Zellstoffe und Holzstoffe sowie Papierhilfsmittel mit einem hydrophoben Charakter führen regelmäßig zu klebenden Ablagerungen an Maschinenteilen und Papiermaschinenbespannungen. Eine Neigung derartiger Inhaltsstoffe klebende Ablagerungen zu bilden hängt von chemischen und physikalischen Randbedingungen, wie z.B. einer Temperatur, einem pH-Wert, einer Konzentration an gelösten und feinstverteilten Substanzen sowie einer hydraulischen Beanspruchung ab.

Zur Reduzierung oder Vermeidung der Ablagerungen werden nach dem Stand der Technik folgende Methoden eingesetzt:
- Durch eine Zugabe mineralischer Adsorbentien, wie beispielsweise Talkum und Bentonite, können die klebenden Verunreinigungen maskiert und unschädlich gemacht werden,
- eine Zugabe kationischer Polymere, welche auch als ein Fixiermittel bezeichnet werden, zur Fixierung der klebenden Verunreinigungen an die Fasern der eingesetzten Faserstoffe, hierdurch werden Anhäufungen von klebrigen Verunreinigungen vermieden,
- eine Flockung und/oder eine Fällung sowie eine anschließende Abtrennung von suspendierten Substanzen nach einer Mikroflotation.

Die zuvor genannten Methoden zur Reduzierung klebender Verunreinigungen nutzen die Zugabe von Hilfsstoffen. Eine Methode diese Hilfsstoffe in einer geeigneten Menge zu dosieren ist nicht bekannt. In der Regel werden die Hilfsstoffe überdosiert, dies führt zu einer erhöhten Kostenbelastung und zu einer zusätzlichen Belastung der Produktionskreisläufe (Verunreinigungen).

Die zur Verringerung der klebenden Verunreinigungen eingesetzten Hilfsstoffe greifen weiterhin in einen Ladungshaushalt der Papierherstellungsanlage ein und verändern beispielsweise bestimmte Entwässerungseigenschaften der Faserstoffsuspension und eine Zurückhaltung bzw. Retention von Füll- und Feinstoffen auf dem Papiermaschinensieb. Dieses veränderte Verhalten schlägt sich letztendlich negativ in der Papierqualität nieder.

Aufgabe der Erfindung ist es ein Verfahren bereitzustellen, welches es ermöglicht, die klebenden Verunreinigungen ohne Zusatz oder mit einem stark reduzierten Einsatz von Hilfsstoffen zu vermeiden.

Die Aufgabe wird mit dem eingangs genannten Verfahren dadurch gelöst, dass der Ausgangsstoff oder das Zwischenprodukt mit, vorzugsweise nicht thermischem, Plasma unter mindestens Atmosphärendruck in Kontakt gebracht wird. Durch eine Behandlung des Ausgangsstoffes oder des Zwischenproduktes, also der klebenden Verunreinigungen, wird eine Oberfläche der klebenden Verunreinigungen derart verändert, dass sie ihre klebenden Eigenschaften vermindern oder gänzlich verlieren. Dadurch wird mit Vorteil vermieden, dass die Verunreinigungen sich weiterhin an beispielsweise Bespannungen, Filzen, Walzen und in einer Trockenpartie ablagern.

Zweckmäßigerweise wird als Ausgangsstoff ein Altpapier verwendet. Insbesondere bei Altpapier treten nach der Auflösung, bedingt durch moderne Druckverfahren, neue wasserlösliche Farben, Glanzmittel, Bindemittel und verbesserten Klebstoff, beispielsweise für die Kartonherstellung, in einer hohen Konzentration die klebrigen Verunreinigungen als zum Teil mikroskopisch kleine Stickies auf.

Bei einer bevorzugten Ausgestaltung des Verfahrens werden keine Hilfsstoffe zum Zweck der Reduzierung der klebenden Verunreinigungen zugesetzt. Kann der Einsatz von Hilfsstoffen gänzlich vermieden werden, so ist dies ein entscheidender Kosten- und Umweltvorteil.

In einer weiteren Ausführungsform der Erfindung werden Hilfsstoffe in einer Menge zugesetzt, die unter Berücksichtigung der Plasma-Applikation bemessen wird. Ist es nicht möglich gänzlich auf den Zusatz von Hilfsstoffen zu verzichten, so kann dennoch nur gerade so viel Hilfsstoff einem beispielsweise Siebwasser zugesetzt werden, dass bei quasi zeitgleicher Zugabe von Hilfsstoffen und der Plasma-Applikation, die klebenden Verunreinigungen eliminiert werden können.

Vorzugsweise wird der Ausgangsstoff oder das Zwischenprodukt im Herstellungsprozess vor einem Stoffauflauf mit dem Plasma appliziert. Später auftretende, beispielsweise Blattqualitätsprobleme wie Löcher und eine reduzierte Festigkeit werden hierdurch verringert.

Mit Vorteil wird der Ausgangsstoff oder das Zwischenprodukt an zumindest einer Stelle zwischen einer Altpapierauflösungsvorrichtung und dem Stoffauflauf mit Plasma appliziert. Wird die Oberfläche der fasrigen Materialien bereits unmittelbar nach der Altpapierauflösung mit Plasma behandelt, können die reduzierten oder gänzlich eliminierten klebrigen Verunreinigungen den folgenden Maschinenlauf nicht mehr beeinflussen.

Zweckmäßig ist es weiterhin, dass der Ausgangsstoff oder das Zwischenprodukt unmittelbar nach einer mechanischen Reinigungsstufe im Herstellungsprozess, insbesondere nach einer letzten Reinigungsstufe, bevor der Ausgangsstoff oder das Zwischenprodukt für den Stoffauflauf verdünnt wird, mit Plasma appliziert wird. Maschinenlaufprobleme durch eine Ablagerung der klebenden Verunreinigungen und dadurch verursachte Abrisse einer Papierbahn, eine reduzierte Maschinengeschwindigkeit und eine hohe Stillstandszeit wegen der Reinigung der Ablagerungen werden somit verringert oder vermieden.

Die bereits erwähnten Blattqualitätsprobleme werden mit besonderem Vorteil dadurch reduziert, dass direkt nach einem Aufspritzen einer Suspension auf ein Sieb, die Suspension mit dem kalten Plasma appliziert wird.

Eine weitere Steigerung der späteren Qualitätseigenschaften des beispielsweise herzustellenden Papiers wird dadurch erreicht, dass das Plasma auf einen fließfähigen Vorhang aus der Suspension appliziert wird.

Für ein gutes Ergebnis ist es zweckmäßig, dass das Plasma in einem Abstand von kleiner als 20 cm, vorzugsweise kleiner als 10 cm, vorzugsweise kleiner als 5 cm, von der Suspension erzeugt wird.

In einer besonderen Ausgestaltung werden bei dem Verfahren zur Erzeugung des Plasmas zwischen Elektroden Hochspannungsimpulse mit einer Dauer von weniger als 10 µs erzeugt.

Je nach Zusammensetzung des Ausgangsstoffes oder des Zwischenproduktes kann es zweckmäßig sein, zur Erzeugung des Plasmas Hochspannungsimpulse mit einer Dauer von 100 ns bis 1 µs zu verwenden.

In einer bevorzugten Ausgestaltung werden im Plasma Radikale erzeugt, die auf den Ausgangsstoff oder auf das Zwischenprodukt einwirken. Die Erzeugung von Radikalen als chemisch aktive Substanzen wirkt sich vorteilhaft auf die Reduzierung klebender Verunreinigungen aus.

Weitere bevorzugte Ausgestaltungsmerkmale ergeben sich aus den weiteren Unteransprüchen.

Mehrere Ausführungsbeispiele sowie weitere Vorteile der Erfindung ergeben sich aus der nachfolgend beschriebenen Zeichnung, in deren
- FIG 1: eine Papierherstellungsanlage mit Wasser- kreisläufen,
- FIG 2: eine Stoffaufbereitungsanlage,
- FIG 3: eine Darstellung (Schnitt) einer Anordnung zur Erzeugung von Radikalen in Koronaplasmen in einer wässrigen Lösung oder in Luft: Pa- rallelplatten- oder Rohranordnung mit Draht, dem eine gepulste Hochspannung überlagert wird,
- FIG 4: eine Prinzipdarstellung von Impulsen zur Er- zeugung von Radikalen in Koronaentladungen in Luft oder wässrigen Medien bei Einsatz kurzer (typisch kleiner 1 µs) Hochspannungs- impulse mit hoher Impulswiederholrate,
- FIG 5 bis FIG 10: Elektrodenanordnungen und Elektrodensysteme zur Erzeugung von Koronaentladungen: Platte- Platte-, Platte-Draht-Platte-, Koaxiale Draht-Rohr-, Spitze-Platte-, Mehrfachspit- zen-Platte-, Gitter-Platte (Rohr-, Gitter- Gitter-Anordnungen,
- FIG 11: eine hybride Entladung, wobei sich eine E- lektrode vollständig oberhalb einer wässri- gen Lösung befindet, wogegen die zweite E- lektrode in die wässrige Lösung eingetaucht ist,
- FIG 12: eine Platten- oder Gitteranordnung mit ge- krümmten Oberflächen zur Anpassung an Gefäß- wände bzw. Nutzung derselben als Elektrode, konzentrische Elektroden in Rohrform zur Nutzung der vorhandenen Verrohrung oder Tür- me für die Pulpe als Reaktorgefäß,
- FIG 13: eine gepulste Entladung im oberflächennahen Raum der wässrigen Lösung,
- FIG 14: ein gepulstes Koronaentladungssystem mit ko- axialem Draht-Rohr, mit eingeperlten, feinstverteilten Gasblasen, so dass im Ent- ladungsbereich feinste Gasperlen vorhanden sind und eine Streamerbildung vorwiegend in den Gasblasen abläuft,
veranschaulicht ist.

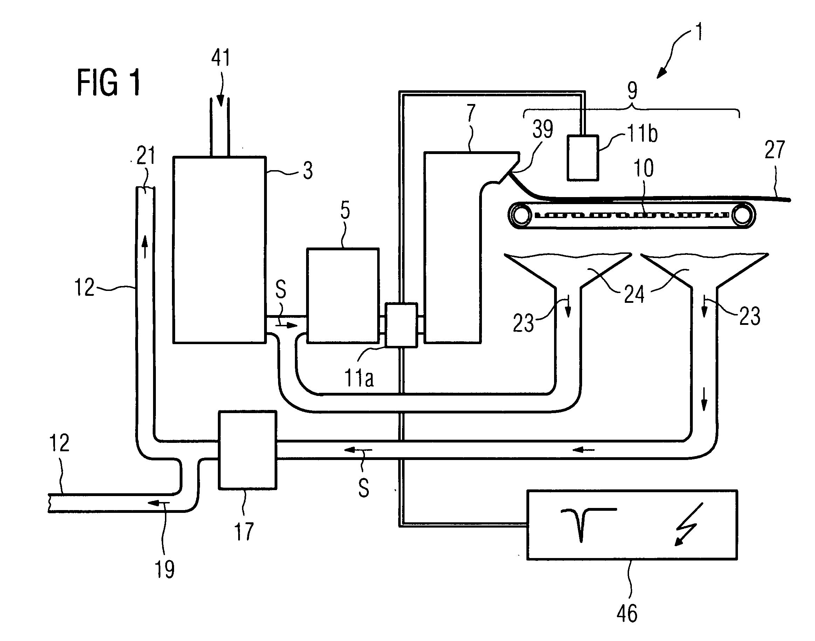

Einander entsprechende Teile sind in den Figuren 1 bis 14 mit denselben Bezugszeichen versehen.

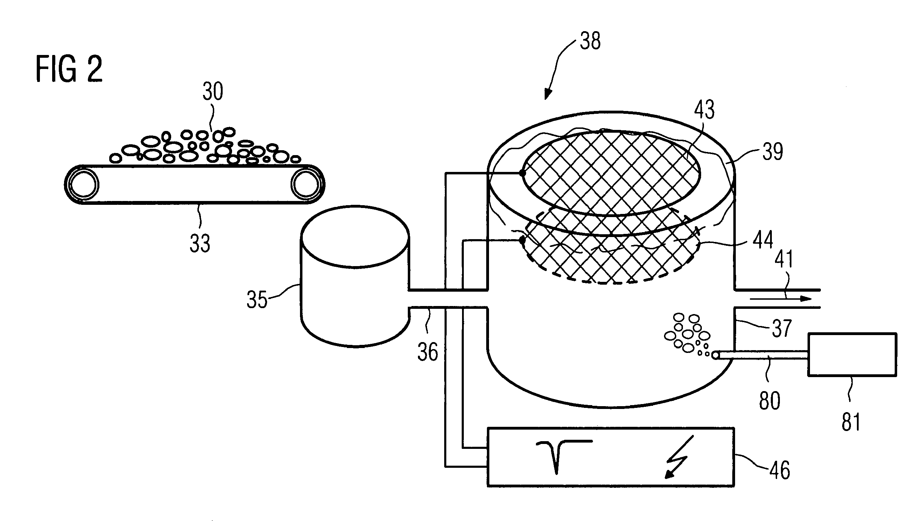

FIG 1 zeigt eine schematische Darstellung einer Papierherstellungsanlage 1, wie sie in heutigen Papierfabriken eingesetzt wird. Im Verhältnis von ca. 1:100 mit Wasser verdünnt, werden Faserstoffe oder fasrige Materialien zusammen mit Hilfsstoffen auf eine Siebvorrichtung 9 mit einem Sieb 10 aufgebracht. Die fasrigen Materialien lagern sich auf dem Sieb 10 neben- und aufeinander ab. Ein Kreislaufwasser 23 kann mittels mehrerer Saugkammerbereiche 24 abfließen oder abgesaugt werden und in einen Kreislauf des Kreislaufwassers 23 in Strömungsrichtung S zurückgeführt werden. Als Ausgangsstoff erreichen beispielsweise Altpapier 30 und in der Regel auch Zellstoff in trockener Form die Papierfabrik, während Holzstoff normalerweise im gleichen Werk erzeugt und als Faser-/Wasser-Mischung, also einer. Suspension aus unverwobenen Faserstoffen, in eine Stoffzentrale 3 gepumpt wird. Das Altpapier 30 wird ebenfalls unter Zugabe von Wasser in einem Fasertrog oder in einer Altpapierauflösevorrichtung 35 aufgelöst siehe Figur 2). Papierfremde Bestandteile werden über verschiedene Sortieraggregate ausgeschleust (hier nicht dargestellt). Das derart aufgelöste Altpapier 30 gelangt über eine Zuführung 41 in die Stoffzentrale 3. In der Stoffzentrale 3 erfolgt je nach gewünschter Papiersorte die Mischung der verschiedenen Rohstoffe. Hier werden auch Füll-, Hilfsstoffe und Komplementärfarben zugegeben, die der Verbesserung der Papierqualität und der Erhöhung der Produktivität dienen. Unerwünschte klebende Verunreinigungen, die sich bereits in der Stoffaufbereitungsanlage 38 (Figur 2) gelöst haben, führen bereits in der Stoffzentrale 3 zu unerwünschten Ablagerungen.

Der Stoffauflauf 7 der Papierherstellungsanlage 1 verteilt die Faserstoff-Suspension gleichmäßig über die gesamte Siebbreite. Am Ende der Siebvorrichtung 9 enthält die Papierbahn 27 noch immer ca. 80 % Wasser.

Das Altpapier 30 (Figur 2) wird also als Ausgangsstoff zur Papierherstellung in der Papierherstellungsanlage 1 verwendet, weist aber klebende Verunreinigungen auf, welche es erfindungsgemäß zu eliminieren gilt.

Für eine Behandlung des Ausgangsstoffes oder des aufgelösten Altpapiers in einem Kreislaufwasser 23 ist in der Papierherstellungsanlage 1 zwischen einem Sortierer 5 und einem Stoffauflauf 7 im Rohrleitungssystem ein Plasmareaktor 11a angeordnet.

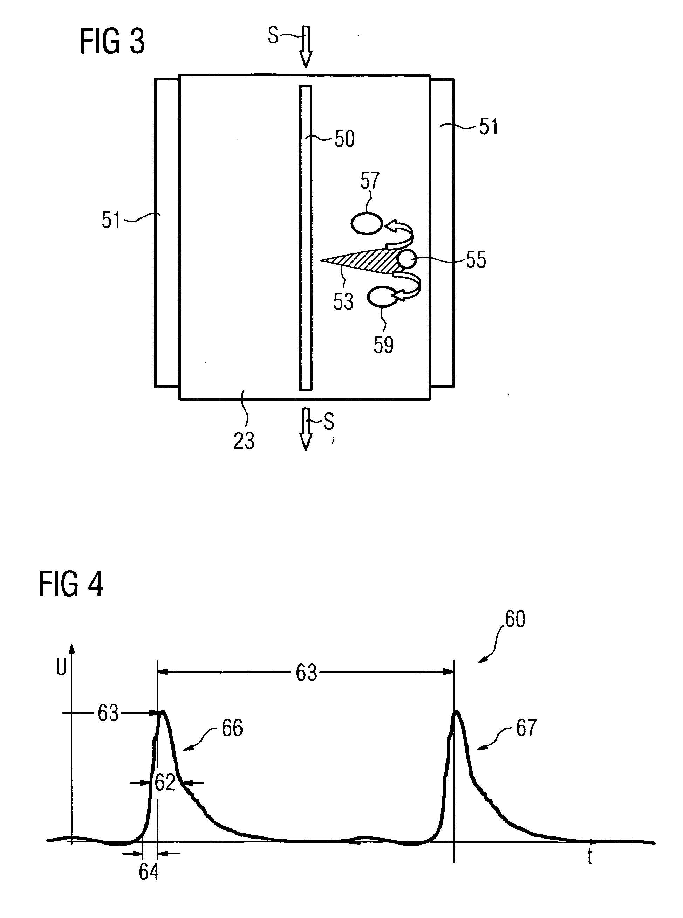

Zur Reduzierung der klebenden Verunreinigungen im Kreislaufwasser 23 ist der erste Plasmareaktor 11a in das Rohrsystem integriert. Für die Integration in ein Rohrsystem wird eine Anordnung nach Figur 3 verwendet.

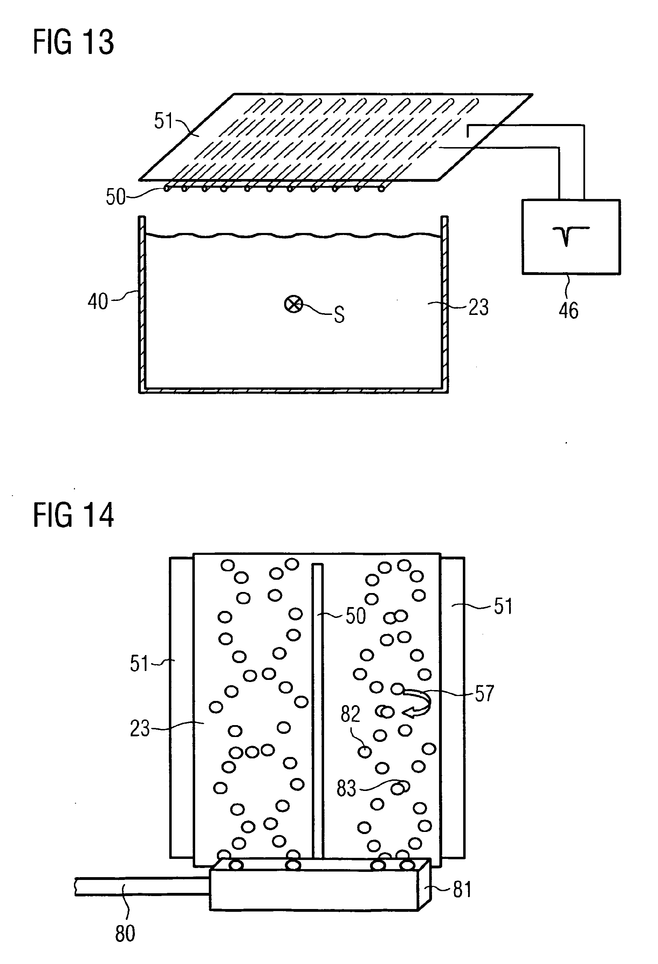

Ein zweiter Plasmareaktor 11b ist oberhalb der Siebvorrichtung 9 derart angeordnet, dass ein auf das Sieb 10 gespritztes Zwischenprodukt 39 oder eine Pulpe mit dem Plasma in Kontakt kommt. Das erfindungsgemäße Verfahren zeichnet sich dadurch aus, dass vorzugsweise an den angegebenen Stellen die Plasmareaktoren 11a, 11b zum einen im Rohrsystem des Kreislaufwassers 23 und zum anderen über der Siebvorrichtung 9 die klebenden Verunreinigungen neutralisiert werden. Ein Hochspannungsimpulsgenerator 46 ist über Hochspannungsleitungen jeweils einzeln mit den Plasmareaktoren 11a und 11b verbunden. Der Plasmareaktor 11a weist zwei Elektroden auf, wie in Figur 3 dargestellt. Der Plasmareaktor 11b weist ebenfalls zwei Elektroden auf, die Ausgestaltung ist, abweichend zum Plasmareaktor 11a ähnlich der in Figur 13 dargestellten Anordnung. Das Grundprinzip ist jedoch jeder Ausgestaltungsform von Plasmareaktoren oder allgemein Elektrodenanordnung gleich.

Der Hochspannungsimpulsgenerator 46 erzeugt mittels Hochspannungsimpulsen 66, 67 (Figur 4) ein Plasma zwischen den Elektroden der Reaktoren. Da eine Spannungsfestigkeit von Wasser, insbesondere von Wasser hoher Leitfähigkeit, wie sie das Kreislaufwasser 23 aufweist, sehr gering ist, mit abnehmender Dauer der Spannungsbelastung jedoch drastisch zunimmt, werden kurze Impulse mit Impulsdauern von typisch 10 µs, in einigen Anwendungsfällen von nur 1µs, benötigt. In der Papierindustrie typische Werte für die Leitfähigkeit des Kreislaufwassers 23 sind 4 bis 5 ms/cm.

FIG 3 zeigt als eine besondere Ausgestaltungsform den aus FIG 1 bekannten Plasmareaktoren 11a. Die Vorrichtung in FIG 3 ist zur Durchleitung des Kreislaufwasser 23 in Strömungsrichtung S und gleichzeitiger Plasmaerzeugung in einem Behandlungsvolumen ausgestaltet. In der Mitte eines Behandlungsvolumens ist eine Hochspannungselektrode 50 angeordnet. Der Außenmantel des Behandlungsvolumens ist als eine Gegenelektrode 51 hergerichtet. In dem Behandlungsvolumen befindet sich das zu behandelnde Kreislaufwasser 23. Zwischen den Elektroden 50 und 51 ist ein Streamer 53 dargestellt. Radikale 59 werden in Streamern dadurch erzeugt, dass energiereiche Elektronen mit Molekülen zusammenstoßen und diese dadurch dissoziieren oder anregen. Bei der Dissoziation werden unmittelbar die Radikale 59 freigesetzt, während bei der Anregung durch einen anschließenden strahlenden Übergang UV-Licht erzeugt wird. Dieses erzeugte UV-Licht reagiert wiederum mit Wassermolekülen und dissoziiert diese.

FIG 2 zeigt mit einem zweiten Anwendungsbeispiel eine Stoffaufbereitungsanlage 38. Ein Altpapier 30 wird über ein Transportband 33 in die Altpapierauflösevorrichtung 35 befördert. In der Altpapierauflösevorrichtung 35 wird das Altpapier 30 mit Wasser versetzt und über eine Rohrleitung 36 in einen Bleichtrog 37 gepumpt. Eine erste Elektrode 43 und eine zweite Elektrode 44 sind jeweils als eine kreisflächige Gitterelektrode ausgeführt. Die erste Elektrode 43 ist im Gasraum der in den Bleichtrog 37 eingefüllten Pulpe 39 angeordnet.

Die zweite Elektrode 44 ist im Inneren des Bleichtroges 37 angeordnet und wird damit vollständig von der Pulpe 39 bedeckt. Zwischen den beiden Elektroden 43 und 44 wird mittels des Hochspannungsimpulsgenerators 46 ein großflächiges kaltes Plasma erzeugt.

Durch eine direkte Behandlung der Pulpe 39 mit dem kalten Plasma werden in der Pulpe 39 vorzugsweise die Radikale OH⁻, HOO⁻, O, O₃ erzeugt. Diese Radikale lösen eine chemische Reaktion aus, welche die in der Pulpe enthaltenen klebrigen Verunreinigungen als auch Harze aus Primärfaserstoffen derart in ihrer Oberflächenstruktur verändert, dass sie nicht mehr kleben. Der Hochspannungsimpulsgenerator 46 wird derart betrieben, dass er Hochspannungsimpulse mit einer Dauer von 1 µs zwischen den Elektroden 43 und 44 erzeugt. Eine für die Erzeugung von Radikalen und Ozon in der Zellstofffaser-Suspension notwendige DC-Spannung liegt bei ca. einigen 10 kV bis 100 kV. Die Hochspannungsimpulse werden der DC-Spannung überlagert und bilden so eine Gesamtamplitude von einigen 10 kV bis über 100 kV. Durch die frühe Behandlung der Pulpe 39 mit einer kalten elektrischen Entladung, also dem Plasma, werden die Radikale in-situ erzeugt. So können große Gesamtmengen von Radikalen in die Pulpe 39 eingebracht werden. Die Radikale werden zudem feinstverteilt in der Suspension erzeugt, so dass auch der bisherige nötige Aufwand zur Mischung von Chemikalien mit der Suspension reduziert werden kann.

Für eine weitere Steigerung der Reduzierung der klebenden Verunreinigungen wird in den Bleichtrog 37 über eine Gasleitung 80 ein Sauerstoff-Argon-Gemisch, welches in einem Gasverteiler 81 aufbereitet wurde, eingeleitet.

In FIG 4 ist der verwendete Spannungsverlauf der Hochspannungsimpulse dargestellt. Ein erster Impuls 66 und ein zweiter Impuls 67, mit je einer Impulsdauer 62, weisen einen Abstand von einer Impulswiederholrate 63 auf. Auf der Abszisse ist die Zeit in ms und auf der Ordinate die Spannung in kV angegeben. Die Einheiten sind willkürlich gewählt. Ein Niveau einer Gleichspannung kann mit der dargestellten Abszisse zusammen fallen. Die dargestellte Impulsspannung U kann also vorzugsweise einer Gleichspannung überlagert werden, die ist stark von der Leitfähigkeit des jeweiligen wässrigen Mediums abhängig. Die Impulse 66 und 67 weisen eine Impulsdauer 62 von kleiner 1 µs auf, wobei die einzelnen Impulse 66, 67 vorzugsweise eine stark ansteigende Flanke mit einer Anstiegszeit 64 besitzen, welche deutlich geringer ist als die Impulsdauer 62. Die zu dem Impuls 66 oder 67 gehörende abfallende Flanke ist weniger stark ausgeprägt. Die Impulswiederholzeit 63 liegt typischer Weise zwischen 10 µs und 100 ms.

Die einzelnen Impulse 66,67 haben eine solche Gesamtamplitude, dass über eine vorgegebene Gleichspannung hinaus eine vorgegebene Energiedichte erreicht wird. Wie erwähnt, ist dabei meist die Impulsanstiegszeit 64 kurz im Vergleich zur Impulsabfallzeit. Durch eine solche Art der Impulse wird erreicht, dass elektrische Durchschläge, die zu räumlichen und zeitlichen Störungen in der homogenen Plasmadichteverteilung führen würden, vermieden werden.

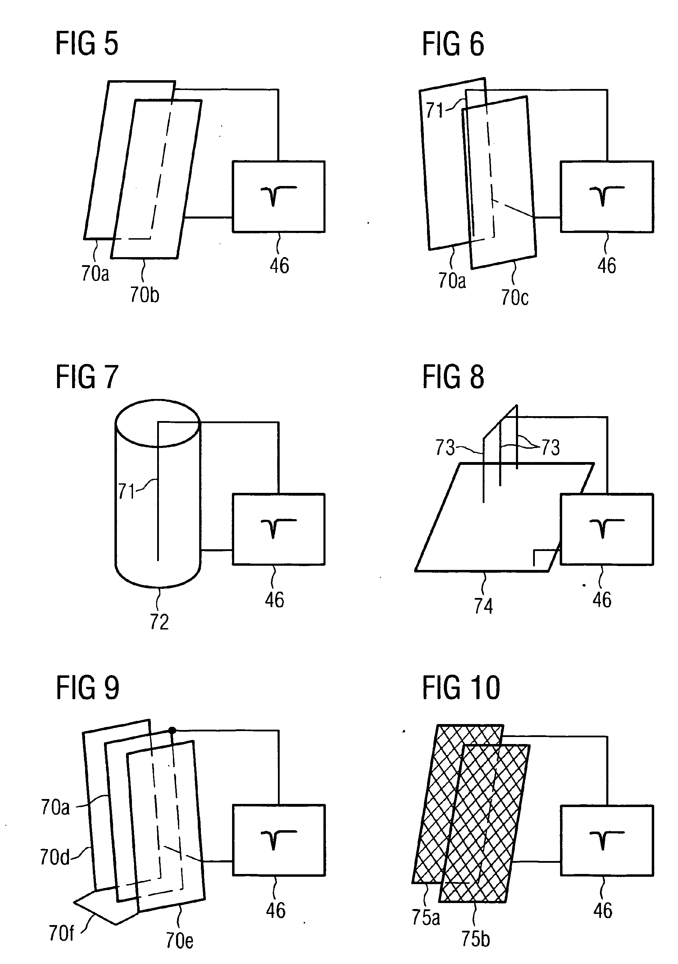

FIG 5 bis FIG 10 zeigen weitere Beispiele für Elektrodensysteme zur Erzeugung von Plasma und/oder Korona-Entladungen in vorzugsweise wässrigen Medien, insbesondere zur alternativen Verwendung bei den vorgenannten Ausführungsbeispielen. In FIG 5 ist eine Platte-Platte-Anordnung von einer ersten Platte 70a als Elektrode und einer zweiten Platte 70b als Elektrode dargestellt. Die erste Platte 70a und die zweite Platte 70b sind parallel zu einander angeordnet. Die erste Platte 70a bildet die Hochspannungselektrode und ist über ein Hochspannungskabel mit dem Hochspannungsimpulsgenerator 46 verbunden. Die zweite Platte 70b bildet die Gegenelektrode und steht als geerdete Elektrode mit dem Hochspannungsimpulsgenerator 46 in Verbindung.

Eine entsprechende Anordnung mit speziell ebenen Plattenelektroden ist in FIG 6 dargestellt. Es sind wiederum zwei massive Plattenelektroden 70a und 70c im festen Abstand vorhanden, wobei mittig eine Hochspannungselektrode 71 verläuft. Bei dieser Platte-Draht-Platte-Anordnung ist die Hochspannungselektrode 71 als massiver Draht ausgeführt und mit dem Hochspannungsausgang des Hochspannungsimpulsgenerators 46 verbunden. Die geerdeten Platten 70a, 70c stehen ebenfalls mit dem Hochspannungsimpulsgenerator 46 in Verbindung.

FIG 7 zeigt eine Draht-Rohr-Anordnung als Elektrodensystem. In eine zylinderförmige Elektrode 72 ragt mittig eine Hochspannungselektrode 71 hinein. Wie in FIG 6 ist die Hochspannungselektrode 71 als massiver Draht ausgeführt und mit dem Hochspannungsimpulsgenerator 46 verbunden. Die zylinderförmige Elektrode 72, welche vorzugsweise als ein Drahtgeflecht ausgestaltet ist, ist geerdet und steht mit dem Hochspannungsimpulsgenerator 46 in Verbindung.

FIG 8 zeigt eine Spitze-Platte-Anordnung als Elektrodensystem. Die beispielsweise drei Spitzen 73 sind über eine Hochspannungsleitung mit dem Hochspannungsimpulsgenerator 46 verbunden. Die Spitzen 73 sind rechtwinklig zu einer geerdeten Plattenelektrode 74 angeordnet. Der Abstand der Spitzenelektroden 73 zu der Plattenelektrode 74 ist einstellbar und kann somit für unterschiedliche Prozessbedingungen angepasst werden.

FIG 9 zeigt eine Elektrodensystemanordnung, welche 3 Platten 70a, 70d und 70e umfasst. Die erste Platte 70a, welche als Hochspannungselektrode mit dem Hochspannungsimpulsgenerator 46 verbunden ist, ist mittig zwischen zwei massiven Platten 70d und 70e angeordnet. Die Platten 70a und 70b sind über einen Plattenverbinder 70f verbunden. Da die Platte 70d als geerdete Gegenelektrode mit dem Hochspannungsimpulsgenerator 46 in Verbindung steht, hat die Platte 70e über dem Plattenverbinder 70f ebenfalls die Funktion einer geerdeten Gegenelektrode.

FIG 10 zeigt ein Elektrodensystem als Gitter-Gitter-Anordnung. Analog zur FIG 5 stehen sich hier ein erstes Gitter 75a und ein zweites Gitter 75b parallel gegenüber. Das erste Gitter 75a bildet hierbei die Hochspannungselektrode und ist mit dem Hochspannungsimpulsgenerator 46 verbunden. Das zweite Gitter 75b bildet die geerdete Gegenelektrode und steht ebenfalls mit dem Hochspannungsimpulsgenerator 46 in Verbindung.

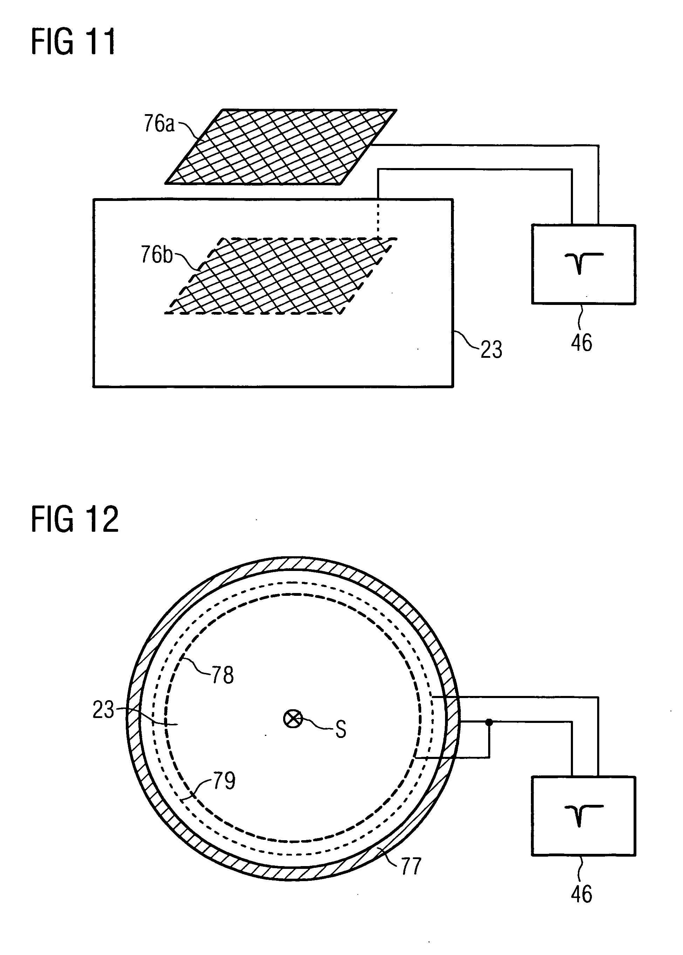

Eine hybride Entladung, wobei sich eine Elektrode 75a vollständig außerhalb des zu behandelnden wässrigen Mediums befindet und eine zweite Elektrode 76b ganz oder teilweise in das wässrige Medium eingetaucht ist, wird mit der Anordnung in FIG 11 erzeugt. Die Elektrode 76a ist bei diesem weiteren Ausführungsbeispiel für einen Plasmareaktor als eine Gitterelektrode ausgeführt und steht mit dem Hochspannungsimpulsgenerator 46 in Verbindung. Auch die geerdete Gegenelektrode 76b ist als eine Gitterelektrode ausgeführt.

In FIG 12 ist als weiteres Ausführungsbeispiel zu den aus FIG 1 bekanten Plasmareaktor 11a ein Rohr, vorzugsweise ein Rohr zum Transport des Kreislaufwassers 23 (Figur 1) in Strömungsrichtung S, mit einer Außenwand 77 in einem Schnitt dargestellt. Es wird eine Platten- oder Gitteranordnung mit gekrümmten Oberflächen zur Anpassung an die Außenwand bzw. einer Gefäßwand 77 als eine Elektrode verwendet. Eine Vielfachdrahtelektrode 79 ist als eine konzentrische Elektrode, dem Verlauf der Außenwand 77 folgend angeordnet und steht mit dem Hochspannungsimpulsgenerator 46 in Verbindung. Ihr stehen zwei Gegenelektroden gegenüber: Zum einen die Gefäßwand 77 und zum anderen eine Plattenelektrode 78. Die Hochspannungselektrode 79 ist zwischen der Gefäßwand 77 und der Plattenelektrode 78 berührungsfrei angeordnet. Die Gefäßwand 77 und die Plattenelektrode 78 sind elektrisch leitend miteinander verbunden und bilden somit die geerdeten Gegenelektroden, welche mit dem Hochspannungsimpulsgenerator 46 in Verbindung stehen.

Um gepulste Entladungen im oberflächennahen Gasraum beispielsweise über dem Sieb 10 oder über dem Kreislaufwasser 23 zu erzeugen ist in FIG 13 als weiteres Ausführungsbeispiel eine spezielle Elektrodenanordnung dargestellt. Das Kreislaufwasser 23 wird in diesem Fall in einem nach oben offenen Kreislaufwasserkanal 40 geführt. Eine Hochspannungselektrode 50 umfasst mehrere elektrisch miteinander verbundene Stabelektroden und ist im oberflächennahen Gasraum des Kreislaufwassers 23 derart angeordnet, dass ihre Stäbe parallel zur Oberfläche des Kreislaufwassers 23 verlaufen. Eine geerdete Gegenelektrode 51 ist als massive Platte ausgeführt und verläuft parallel zu den über die ganze Fläche der Hochspannungselektrode 50 in äquidistanten Abständen verteilten Stabelektroden. Auch eine Wand des Kreislaufwasserkanals 40 könnte alternativ als Gegenelektrode ausgeführt sein.

FIG 14 zeigt mit einem letzten Ausführungsbeispiel ein gepulstes Plasma oder Korona-Entladungssystem in einer wässrigen Lösung in einem Gefäß, Behälter, Bottich oder Rohr. Das Elektrodensystem ist analog zur FIG 3 als ein Koaxialdraht-Rohrelektrodensystem ausgebildet. Die Hochspannungselektrode 50 ist koaxial zu der Gegenelektrode 51, welche die Gefäßwand bildet, angeordnet. Zur Unterstützung der Radikalerzeugung bzw. der Erzeugung der chemisch aktiven Substanzen werden über eine Gasleitung 80 mittels eines Gasverteilers 81 feinste Gasperlen in den Entladungsbereich eingeleitet. In den Gasblasen 82 und 83 bilden sich vorzugsweise die zu FIG 3 erläuterten Streamer aus. Aufgrund der Streamerentladungen entstehen Oxidanzien 57. Es werden also in dem Kreislaufwasser 23 bestimmte Radikale erzeugt.

## Patentansprüche

1. Verfahren zur Reduzierung klebender Verunreinigungen in einem Ausgangsstoff (30) oder einem Zwischenprodukt (39) bei der Papierherstellung, welches in wässriger Suspension oder einem Kreislaufwasser (23) vorliegt,
**dadurch gekennzeichnet, dass** der Ausgangsstoff (30) oder das Zwischenprodukt (39) mit, vorzugsweise nicht thermischem, Plasma unter mindestens Atmosphärendruck in Kontakt gebracht wird.

2. Verfahren nach Anspruch 1,
wobei als Ausgangsstoff (30) ein Altpapier (30) verwendet wird.

3. Verfahren nach einem der Ansprüche 1 oder 2,
wobei keine Hilfsstoffe zum Zweck der Reduzierung der klebenden Verunreinigungen zugesetzt werden.

4. Verfahren nach einem der Ansprüche 1 oder 2,
wobei Hilfsstoffe in einer Menge zugesetzt werden, die unter Berücksichtigung der Plasma-Applikation bemessen wird.

5. Verfahren nach einem der Ansprüche 1 bis 4,
wobei der Ausgangsstoff (30) oder das Zwischenprodukt (39) im Herstellungsprozess vor einem Stoffauflauf (7) mit dem Plasma appliziert wird.

6. Verfahren nach einem der Ansprüche 1 bis 5,
wobei der Ausgangsstoff (30) oder das Zwischenprodukt (39) an zumindest einer Stelle zwischen einer Altpapierauflösungsvorrichtung (35) und dem Stoffauflauf (7) mit dem Plasma appliziert wird.

7. Verfahren nach einem der Ansprüche 1 bis 5,
wobei der Ausgangsstoff (30) oder das Zwischenprodukt (39) unmittelbar nach einer mechanischen Reinigungsstufe im Herstellungsprozess, insbesondere nach einer letzten Reinigungsstufe bevor der Ausgangsstoff (30) oder das Zwischenprodukt (39) für den Stoffauflauf (7) verdünnt wird, mit Plasma appliziert wird.

8. Verfahren nach einem der Ansprüche 1 bis 7,
wobei direkt nach einem Aufspritzen des Zwischenproduktes (39) auf ein Sieb (10), das Zwischenprodukt (39) mit dem Plasma appliziert wird.

9. Verfahren nach Anspruch 8,
wobei das Plasma auf einen fließfähigen Vorhang aus dem Zwischenprodukt (39) appliziert wird.

10. Verfahren nach einem der vorhergehenden Ansprüche,
wobei das Plasma mittels einer mit einem Hochspannungsimpulsgenerator (46) verbundenen Elektrode (43,44) erzeugt wird.

11. Verfahren nach einem der Ansprüche 8 bis 10,
wobei das Plasma in einem Abstand von kleiner als 20 cm, vorzugsweise kleiner als 10 cm, vorzugsweise kleiner als 5 cm, von dem Zwischenprodukt (39) erzeugt wird.

12. Verfahren nach einem der Ansprüche 10 bis 11,
wobei zur Erzeugung des Plasmas zwischen Elektroden (43,44; 47,48) Hochspannungsimpulse (66,67) mit einer Dauer (62) von weniger als 10 µs erzeugt werden.

13. Verfahren nach Anspruch 12,
wobei zur Erzeugung des Plasmas Hochspannungsimpulse (66,67) mit einer Dauer (62) von 100ns bis 1µs verwendet werden.

14. Verfahren nach einem der vorhergehenden Ansprüche,
wobei im Plasma Radikale (59) erzeugt werden, die auf den Ausgangsstoff (30) oder das Zwischenprodukt (39) einwirken.

15. Verfahren nach Anspruch 14,
wobei als Radikale (59) Ozon (O₃), Wasserstoffperoxyd (H₂O₂), OH, HO₂ und/oder HO₂⁻ erzeugt werden.

16. Verfahren nach einem der Ansprüche 14 oder 15,
wobei eine Erzeugungsrate der Radikale (59) und/oder eine Zusammensetzung der erzeugten Radikale (59) durch eine Beeinflussung einer Amplitude (U), einer Impulsdauer (62) und/oder einer Impulswiederholrate (63) der Hochspannungsimpulse (66,67) gesteuert und/oder geregelt wird.

17. Verfahren nach Anspruch 16,
wobei zur Steuerung und/oder Regelung der Erzeugungsrate und/oder der Art der erzeugten Radikale (59) eine Konzentration der erzeugten Radikale (59) gemessen wird.

18. Verfahren nach Anspruch 17,
wobei die Konzentration "online", insbesondere in Echtzeit, gemessen wird.

19. Verfahren nach einem der Ansprüche 16 bis 18,
wobei die Impulswiederholrate (63) zwischen 10 Hz und 5 kHz, insbesondere zwischen 5kHz und 10kHz, eingestellt wird.

20. Verfahren nach einem der Ansprüche 16 bis 19,
wobei eine Leistungseinkopplung elektrischer Energie in das Plasma vorwiegend über die Regelung der Amplitude (U), der Impulsdauer (62) und der Impulswiederholrate (63) der einer DC-Spannung überlagerten Hochspannungsimpulse gesteuert wird.

21. Verfahren nach einem der vorstehenden Ansprüche,
wobei ein homogenes, großvolumiges Plasma mit hoher Leistungsdichte erzeugt wird, ohne dass es zu Plasmaeinschnürungen oder Durchschlägen kommt.

22. Verfahren nach einem der Ansprüche 20 oder 21,
wobei die DC-Spannung mit einer Höhe eingesetzt wird, dass im Plasma nur in Verbindung mit den überlagerten Hochspannungsimpulsen eine stabile DC-Koronaentladung gebildet wird.

23. Verfahren nach einem der Ansprüche 20 bis 22,
wobei die eingesetzte DC-Spannung unter einer Spannung für einen stabilen Betrieb ohne Hochspannungs-Impulsüberlagerung liegt.

24. Verfahren nach einem der Ansprüche 16 bis 23,
wobei eine eingesetzte Gesamtamplitude (DC-Spannung + Impulsamplitude) über einer statischen Durchbruchspannung der Elektrodenanordnung liegt.

25. Verfahren nach Anspruch 24,
wobei die eingesetzte Gesamtamplitude dem zwei- bis fünffachen der statischen Durchbruchspannung der Elektrodenanordnung entspricht.

26. Verfahren nach einem der Ansprüche 20 bis 25,
wobei die Amplitude (U) der Hochspannungsimpulse zwischen 10% und 1000% der eingesetzten DC-Spannung beträgt.

## Claims

1. Method for reducing adhering impurities in a starting material (30) or an intermediate product (39) which is present in aqueous suspension or in a circulation water (23) in paper production,
**characterised in that** the starting material (30) or the intermediate product (39) is brought into contact with preferably non-thermal plasma under at least atmospheric pressure.

2. Method according to claim 1,
wherein recovered paper (30) is used as the starting material (30).

3. Method according to one of claims 1 or 2,
wherein no additives are added for the purpose of reducing the adhering impurities.

4. Method according to one of claims 1 or 2,
wherein additives are added in a quantity which is dimensioned taking into account the plasma application.

5. Method according to one of claims 1 to 4,
wherein the plasma is applied to the starting material (30) or the intermediate product (39) upstream of a headbox (7) during the production process.

6. Method according to one of claims 1 to 5,
wherein the plasma is applied to the starting material (30) or the intermediate product (39) at at least one position between a recovered paper dissolution device (35) and the headbox (7).

7. Method according to one of claims 1 to 5,
wherein the plasma is applied to the starting material (30) or the intermediate product (39) immediately after a mechanical cleaning stage in the production process, in particular after a final cleaning stage before the starting material (30) or the intermediate product (39) is diluted for the headbox (7).

8. Method according to one of claims 1 to 7,
wherein the plasma is applied to the intermediate product (39) directly after the intermediate product (39) has been sprayed onto a screen (10).

9. Method according to claim 8,
wherein the plasma is applied onto a free-flowing curtain composed of the intermediate product (39).

10. Method according to one of the preceding claims,
wherein the plasma is produced by means of an electrode (43,44) connected to a high-voltage pulse generator (46).

11. Method according to one of claims 8 to 10,
wherein the plasma is produced at a distance of less than 20 cm, preferably less than 10 cm, preferably less than 5 cm, from the intermediate product (39).

12. Method according to one of claims 10 to 11,
wherein high-voltage pulses (66,67) having a duration (62) of less than 10 µs are generated between electrodes (43,44; 47,48) for the purpose of producing the plasma.

13. Method according to claim 12,
wherein high-voltage pulses (66,67) having a duration (62) of 100 ns to 1 µs are used for the purpose of producing the plasma.

14. Method according to one of the preceding claims,
wherein radicals (59) are generated in the plasma which act on the starting material (30) or the intermediate product (39).

15. Method according to claim 14,
wherein ozone (O₃), hydrogen peroxide (H₂O₂), OH, HO₂ and/or HO₂⁻ are generated as radicals (59).

16. Method according to one of claims 14 or 15,
wherein a rate of generation of the radicals (59) and/or a composition of the generated radicals (59) are/is controlled and/or regulated by influencing an amplitude (U), a pulse duration (62) and/or a pulse repetition rate (63) of the high-voltage pulses (66,67).

17. Method according to claim 16,
wherein a concentration of the generated radicals (59) is measured for the purpose of controlling and/or regulating the generation rate and/or the type of radicals (59) generated.

18. Method according to claim 17,
wherein the concentration is measured "online", in particular in real time.

19. Method according to one of claims 16 to 18,
wherein the pulse repetition rate (63) is set between 10 Hz and 5 kHz, in particular between 5 kHz and 10 kHz.

20. Method according to one of claims 16 to 19,
wherein a power injection of electrical energy into the plasma is controlled primarily via the regulation of the amplitude (U), the pulse duration (62) and the pulse repetition rate (63) of the high-voltage pulses superimposed on a DC voltage.

21. Method according to one of the preceding claims,
wherein a homogeneous, large-volume plasma with high power density is produced without plasma constrictions or breakdowns occurring.

22. Method according to one of claims 20 or 21,
wherein the DC voltage is applied at a level such that a stable DC corona discharge is formed in the plasma only in conjunction with the superimposed high-voltage pulses.

23. Method according to one of claims 20 to 22,
wherein the applied DC voltage lies below a voltage required for stable operation without high-voltage pulse superimposition.

24. Method according to one of claims 16 to 23,
wherein a total amplitude used (DC voltage + pulse amplitude) lies above a static breakdown voltage of the electrode arrangement.

25. Method according to claim 24,
wherein the total amplitude used is equivalent to two to five times the static breakdown voltage of the electrode arrangement.

26. Method according to one of claims 20 to 25,
wherein the amplitude (U) of the high-voltage pulses is equal to between 10% and 1000% of the applied DC voltage.

## Revendications

1. Procédé de réduction d'impuretés collantes dans une matière première ( 30 ) ou dans un produit ( 39 ) intermédiaire dans la fabrication du papier, qui se présente sous la forme d'une suspension aqueuse ou d'une eau ( 23 ) de recyclage, **caractérisé en ce que** l'on met la matière première ( 30 ) ou le produit ( 39 ) intermédiaire en contact au moins sous la pression atmosphérique avec un plasma, de préférence non thermique.

2. Procédé suivant la revendication 1,
dans lequel on utilise du vieux papier ( 30 ) comme matière première ( 30 ).

3. Procédé suivant l'une des revendications 1 ou 2,
dans lequel on n'ajoute pas d'adjuvant en vue de la réduction des impuretés collantes.

4. Procédé suivant l'une des revendications 1 ou 2,
dans lequel on ajoute des adjuvants en une quantité qui est proportionnée en tenant compte de l'application du plasma.

5. Procédé suivant l'une des revendications 1 à 4,
dans lequel on applique le plasma à la matière première ( 30 ) ou au produit ( 39 ) intermédiaire dans l'opération de fabrication avant une arrivée ( 7 ) de pâte.

6. Procédé suivant l'une des revendications 1 à 5,
dans lequel on applique le plasma à la matière première ( 30 ) ou à le produit ( 39 ) intermédiaire en au moins un point compris entre un dispositif ( 35 ) de désintégration du vieux papier et l'arrivée ( 7 ) de la pâte.

7. Procédé suivant l'une des revendications 1 à 5,
dans lequel on applique le plasma à la matière première ( 30 ) ou au produit ( 39 ) intermédiaire juste après une étape d'épuration mécanique dans l'opération de fabrication, notamment juste après une dernière étape d'épuration avant que la matière première ( 30 ) ou le produit ( 39 ) intermédiaire soit dilué pour l'arrivée ( 7 ) de pâte.

8. Procédé suivant l'une des revendications 1 à 7,
dans lequel on applique le plasma au produit ( 39 ) intermédiaire après la pulvérisation du produit ( 39 ) intermédiaire sur un tamis ( 10 ).

9. Procédé suivant la revendication 8,
dans lequel on applique le plasma sur un rideau apte à s'écouler en le produit ( 39 ) intermédiaire.

10. Procédé suivant l'une des revendications précédentes,
dans lequel on produit le plasma au moyen d'une électrode ( 43, 44 ) reliée à un générateur ( 46 ) d'impulsions de haute tension.

11. Procédé suivant l'une des revendications 8 à 10,
dans lequel on produit le plasma, à une distance du produit ( 39 ) intermédiaire plus petite que 20 cm, de préférence plus petite que 10 cm, de préférence plus petite que 5 cm.

12. Procédé suivant l'une des revendications 10 à 11,
dans lequel, pour la production du plasma on produit entre des électrodes ( 43, 44 ; 47, 48 ) des impulsions ( 66, 67 ) de haute tension d'une durée ( 62 ) de moins de 10 µs.

13. Procédé suivant la revendication 12,
dans lequel, pour la production du plasma, on utilise des impulsions ( 66, 67 ) de haute tension d'une durée ( 62 ) de 100ns à 1 µs.

14. Procédé suivant l'une des revendications précédentes,
dans lequel on produit dans le plasma des radicaux ( 139 ) qui agissent sur la matière première ( 30 ) ou sur le produit ( 39 ) intermédiaire.

15. Procédé suivant la revendication 14,
dans lequel on produit comme radicaux ( 59 ) de l'ozone ( 03 ), du peroxyde d'hydrogène ( H2O2 ), OH, H02 et/ou H02-.

16. Procédé suivant l'une des revendications 14 ou 15,
dans lequel on maîtrise et/ou on règle un taux de production des radicaux ( 59 ) et/ou une composition des radicaux ( 59 ) produits en jouant sur une amplitude ( U ), une durée ( 62 ) d'impulsion et/ou une fréquence ( 63 ) de répétition des impulsions ( 66, 67 ) de haute tension.

17. Procédé suivant la revendication 16,
dans lequel pour maîtriser et/ou régler le taux de production et/ou le type des radicaux ( 59 ) produits, on mesure une concentration des radicaux ( 59 ) produits.

18. Procédé suivant la revendication 17,
dans lequel on mesure la concentration « online », notamment en temps réel.

19. Procédé suivant l'une des revendications 16 à 18,
dans lequel on règle la fréquence ( 63 ) de répétition des impulsions entre 10 Hz et 5 kHz, notamment entre 5kHz et 10kHz.

20. Procédé suivant l'une des revendications 16 à 19,
dans lequel on maîtrise une injection de puissance d'énergie électrique dans le plasma d'une manière prépondérante en régulant l'amplitude ( U ), la durée ( 62 ) et la fréquence ( 63 ) de répétition des impulsions d'ondes de haute tension superposées à un courant continu.

21. Procédé suivant l'une des revendications précédentes,
dans lequel on produit un plasma homogène, de grand volume et ayant une grande densité de puissance, sans qu'il se produise des contractions de plasma ou des décharges.

22. Procédé suivant l'une des revendications 20 ou 21,
dans lequel on utilise la tension en courant continu ayant un niveau tel qu'il se forme dans le plasma une décharge à effet couronne stable en courant continu seulement en liaison avec les impulsions de haute tension superposées.

23. Procédé suivant l'une des revendications 20 à 22,
dans lequel la tension en courant continu utilisée est inférieure à une tension pour un fonctionnement stable sans superposition d'impulsion de haute tension.

24. Procédé suivant l'une des revendications 16 à 23,
dans lequel une amplitude globale utilisée ( tension en courant continu + amplitude des impulsions ) est supérieure à une tension de claquage statique de l'agencement d'électrode.

25. Procédé suivant la revendication 24,
dans lequel l'amplitude globale utilisée correspond à deux à cinq fois la tension de claquage statique de l'agencement d'électrode.

26. Procédé suivant l'une des revendications 20 à 25,
dans lequel l'amplitude ( U ) des impulsions de haute tension est comprise entre 10% et 1000% de la tension en courant continu utilisée.
